# EUROPEAN PATENT SPECIFICATION

(11) **EP 1 031 288 B1**
(45) Date of publication and mention of the grant of the patent: **08.12.2004**
(21) Application number: 00103387.7
(22) Date of filing: 24.02.2000
(51) Int. Cl.: A23L 1/304, A23C 9/142, A23L 2/52

(54) **Milk mineral composition**
Milchmineralienzusammensetzung
Composition de minéraux du lait

(30) Priority: 24.02.1999 JP 4600299
(43) Date of publication of application: 30.08.2000
(73) Proprietor: SNOW BRAND MILK PRODUCTS, CO., LTD., Sapporo-shi Hokkaido 065-0043 (JP)
(72) Inventor: Shigematsu, Akinori, Saitama-ken (JP); Kofani, Masanori, Saitama-ken (JP); Tomizawa, Akira, Iruma-shi, Saitama-ken (JP)
(74) Representative: VOSSIUS & PARTNER

(56) References cited:
- EP-A- 0 408 756
- EP-A- 0 536 612
- WO-A-99/40798
- GEILMAN W G ET AL: "PRODUCTION OF AN ELECTROLYTE BEVERAGE FROM MILK PERMEATE" JOURNAL OF DAIRY SCIENCE,US,AMERICAN DAIR SCIENCE ASSOCIATION. CHAPAIGN, ILLINOIS, vol. 75, no. 9, 1 September 1992 (1992-09-01), pages 2364-2369, XP000305310 ISSN: 0022-0302
- DATABASE FSTA [Online] INTERNATIONAL FOOD INFORMATION SERVICE (IFIS), FRANFURT/MAIN, DE MUCCHETTI G ET AL: "Whey and ultrafiltration permeate demineralization by electrodialysis." Database accession no. 94-1-03-p0137 XP002139403 & SCIENZA E TECNICA LATTIERO-CASEARIA, vol. 44, no. 1, 1993, pages 51-62, Istituto Sperimentale Lattiero Caseario, Lodi, Italy

## Description

The present invention relates to a milk mineral composition obtained from milk and a method for producing the same.

The milk mineral composition of the present invention has a well-balanced calcium-magnesium ratio and high solubility and can thus be added to drinks or food products for mineral fortification.

In recent years, a number of calcium materials have been developed and widely used in food products in order to prevent bone diseases such as osteoporosis. Of these calcium materials, milk calcium has an extremely high absorption rate, which has recently become a general notion.

However, the calcium content in milk is much higher than that of other minerals. In particular, the calcium content is about 10 times higher than the magnesium content. In fact, many of the milk-derived calcium materials on the market contain over 15 times more calcium than magnesium.

Magnesium, over half of which is distributed in the bones, has an essential life-sustaining physiological activity. It is known that nervous disorders or increasing fatigue will occur if insufficient intake of magnesium continues, yet magnesium levels in the body are at present low and insufficient. Specifically, current magnesium intake is deemed to be about 65% of the recommended amount, i.e., 300 mg for adult females and 350 mg for adult males. Thus, the intake is evidently insufficient. Moreover, the chances of a substantial increase in intake in the future appear slim. In contrast, calcium consumption is now greatly increasing.

Both magnesium and calcium are classified as alkaline-earth metals and become divalent cations when activated in the body. Thus, physicochemical characteristics of both elements are very similar. On the other hand, the physiological action on blood vessels is entirely different from one to another. Magnesium and calcium work antagonistically. That is, one relaxes arteries while the other contracts the same. Thus, tension in the coronary artery rises and blood pressure increases, and the probability of vasospasm becomes high when the magnesium level is too low relative to that of calcium. Conversely, blood vessels relax and blood pressure decreases when the magnesium level increases in relation to calcium. Therefore, a good balance between trace minerals in the blood is an important condition for maintaining human health. A 1:2 ratio, by weight, of magnesium and calcium intake for adults is proposed as being ideal. It is also said that calcium intake should be increased from childhood to adolescence.

This magnesium and calcium intake ratio also agrees with the abovementioned recommended calcium intake (650 mg) and magnesium intake (300 mg). In recent years, attention has focused primarily on calcium intake, and a number of drinks and food products for calcium supplements have been developed. However, a magnesium supplement has never been taken into consideration in these products. As a result, the ratio of magnesium intake relative to calcium intake has become considerably low. Under these circumstances, there is a need to develop food products in which both calcium intake and magnesium intake are taken into consideration.

Although milk calcium compositions have an excellent calcium absorption rate, the magnesium contents of these compositions do not always lead to a desirable calcium and magnesium intake ratio. Furthermore, commercial calcium materials or magnesium materials can be used without difficulties in acidic drinks but the addition of an emulsifier or the like is essential in other drinks. Moreover, these calcium materials or magnesium materials form an undesirable sediment.

Milk mineral compositions are known in the art, e.g. from Geilman et al (Journal of Diary Science, 75 (1992) p.2364-2369).

In the course of an intensive study to resolve the abovementioned problems in mineral materials, the present inventors found that the calcium-magnesium ratio (calcium/magnesium) in a UF permeate obtained by filtering milk products such as whole milk, skim milk and buttermilk using an ultrafiltration (UF) membrane is 3/1. The present inventors focused on this finding and then found that a milk mineral composition having a well-balanced calcium-magnesium ratio and high solubility could be obtained by filtering this UF permeate with a nanofiltration (NF) membrane to remove monovalent minerals and removing lactose by crystallization, then concentrating and/or drying the resulting liquid. The present invention was thus accomplished. Accordingly, the objective of the present invention is to provide a milk mineral composition which has a well-balanced calcium-magnesium ratio and high solubility, and a method for producing the same.

In the present invention, a milk mineral composition having a well-balanced calcium-magnesium ratio and high solubility can be obtained by removing monovalent minerals and lactose from a UF permeate obtained by filtering milk products, such as whole milk, skimmed milk and buttermilk, through a UF-membrane.

The demand for such products as milk protein concentrates (MPCs) and total milk proteins (TMPs) has been increasing in recent years, and the effective use of UF permeates, the byproducts of these products, is highly significant for the effective use of resources.

A milk mineral composition of the present invention can be produced as follows.

First, milk products such as whole milk, skimmed milk and buttermilk are filtered with a UF membrane to obtain a UF permeate. The concentrate obtained by the UF-membrane filtration is concentrated proteins which can be used in various ways.

Next, monovalent minerals such as sodium and potassium are removed from the UF permeate. The method to remove monovalent minerals is not particularly limited. The monovalent minerals can be removed by concentrating the UF permeate using NF-membrane, or by dialysis filtration in which filtration is carried out while adding water. Monovalent minerals can also be removed by desalting using a monovalent selective electrodialysis (ED) membrane. The degree of concentration is not particularly limited but preferably more than 5 times. The DF-membrane treatment can be done with the addition of up to 0.5 times water, and the use of water treated with ion exchange resins is preferable.

Further, lactose is removed from the UF permeate from which monovalent minerals are removed. The method to remove lactose is also not particularly limited. For example, lactose can be crystallized by concentrating the UF permeate from which monovalent minerals are removed, and then the crystallized lactose can be removed by filtration, centrifugation, or the like.

The UF permeate obtained as mentioned above can be concentrated using a vacuum concentrator for use as a milk mineral composition concentrate solution, or it can be spray-dried or freeze-dried to produce a powdered milk mineral composition.

A milk mineral composition thus obtained contains components in the following ratios (1) and (2):
(1) 0.48 ≥ log{(amount of calcium in composition)/(amount of magnesium in composition)}
(2) -0.30 ≤ log {(amount of calcium in composition)/(amount of sodium in composition)}

If the value of log {(amount of calcium in composition)/(amount of magnesium in composition)} is higher than 0.48, the amount of calcium is too high as compared to that of magnesium in which case a milk mineral composition having a poorly-balanced calcium-magnesium ratio is produced. If the value of log {(amount of calcium in composition )/(amount of sodium in composition)} is lower than -0.30, an undesirable taste resulting from salts, such as sodium, is intensified.

This milk mineral composition has a well-balanced calcium-magnesium ratio and a reduced monovalent mineral content, which is tasty, and is also highly soluble in drinks other than acidic drinks when used as a milk mineral material.

The present invention will be explained in detail in the following examples.

### Example 1

Skim milk (300 kg) was concentrated by 5 times using a UF membrane having a fractionation molecular weight of 10 kDa (DK3840C, a product of Desalination) to obtain 240 kg of UF permeate, and this permeate was then concentrated by 10 times using an NF membrane having a salt suppression ratio of 50% (Desal-5, a product of Desalination) to obtain 20 kg of NF concentrate. Next, this NF concentrate (20 kg) was concentrated to 1/4 volume using a vacuum concentrator, after which the resulting concentrate was cooled to 4C and allowed to stand for 12 hours to crystallize lactose, which was then removed using a 1.0 µm cellulose filter to obtain 1.5 kg of lactose mother liquid containing calcium and magnesium. Finally, this lactose mother liquid (1.5 kg) was freeze-dried to obtain 400 g of powdered milk mineral composition of the present invention.

This milk mineral composition had a total solid content of 96% and contained 21.6% protein (of which nonprotein nitrogen (NPN) is 17.8%), 44% lactose and 30.4% minerals (1,045 mg% calcium, 540 mg% magnesium and 1,540 mg% sodium (of total solid)), and had a value for log {(amount of calcium in composition)/(amount of magnesium in composition)} of 0.29 and a value for log {(amount of calcium in composition)/(amount of sodium in composition )} of -0.17.

### Example 2

Skim milk (100 kg) was concentrated by 5 times using a UF membrane having a fractionation molecular weight of 10 kDa (DK3840C, a product of Desalination) to obtain 80 kg of UF permeate, and this permeate was then desalted by filtering with a monovalent cation selective ED membrane (AMS/CMS, a product of Tokuyama Inc.) to attain a conductivity of 1.0 mS/cm. Next, this ED-desalted liquid was concentrated to 1/12 volume using a vacuum concentrator, after which the resulting concentrate was cooled to 4C and allowed to stand for 12 hours to crystallize lactose, which was then removed using a 1.0 µm cellulose filter to obtain 1.3 kg of lactose mother liquid containing calcium and magnesium. Finally, this lactose mother liquid (2 kg) was freeze-dried to obtain 500 g of powdered milk mineral composition of the present invention.

This milk mineral composition had a total solid content of 22% and contained 3.23% protein (of which nonprotein nitrogen (NPN) is 2.98%), 10% lactose and 6.98% minerals (1,043 mg% calcium, 540 mg% magnesium and 1,320 mg% sodium (of total solid)), and had a value for log {(amount of calcium in composition)/(amount of magnesium in composition)} of 0.29 and a value for log {(amount of calcium in composition)/(amount of sodium in composition )} of -0.10.

### Example 3

Skim milk (300 kg) was concentrated by 5 times using a UF membrane having a fractionation molecular weight of 10 kDa (DK3840C, a product of Desalination) to obtain 240 kg of UF permeate, and this permeate was then concentrated by 10 times using an NF membrane having a salt rejecting ratio of 50% (Desal-5, a product of Desalination) to obtain 20 kg of NF concentrate. Next, this NF concentrate (20 kg) was concentrated to 1/4 volume using a vacuum concentration machine, after which the resulting concentrate was cooled to 4C to crystallized lactose, which was then removed using a 1.0 µm cellulose filter to obtain 1.3 kg of lactose mother liquid containing calcium and magnesium. Finally, this lactose mother liquid (1.3 kg) was freeze-dried to obtain 355 g of powdered milk mineral composition of the present invention.
This milk mineral composition had a total solid content of 96% and contained 21.6% protein (of which nonprotein nitrogen (NPN) is 17.8%), 44% lactose and 30.4% minerals (1,543 mg% calcium, 850 mg% magnesium and 1,220 mg% sodium (of total solid)), and had a value for log {(amount of calcium in composition)/(amount of magnesium in composition)} of 0.25 and a value for log {(amount of calcium in composition)/(amount of sodium in composition )} of 0.10.

### Example 4

To a preliminary emulsion prepared by adding 24.5 g of salt-free butter to 1,276.5 g of blending water at 65C, 150 g of the milk mineral composition obtained in Example 1, 33.7 g of MPC and 15.3 g of lactose were admixed to produce a calcium-magnesium fortified milk (product 1 of the present invention).

### Comparative Example 1

To a preliminary emulsion which was prepared by adding 24.5 g of salt-free butter to 1,276.5 g of blending water at 65C, 30 g of a calcium carbonate-magnesium carbonate mixed solution (6.0% calcium carbonate, 3.0% magnesium carbonate, 1.5% emulsifier) and 100 g of skim milk were admixed to produce a calcium/magnesium fortified milk (control product 1).

### Comparative Example 2

To a preliminary emulsion which was prepared by adding 24.5 g of salt-free butter to 1,276.5 g of blending water at 65C, 10 g of a calcium carbonate-magnesium carbonate mixed solution (6.0% calcium carbonate, 3.0% magnesium carbonate, 1.5% emulsifier), 100 g of a lactose-free permeate, 33.7 g of MPC and 15.3 g of lactose were admixed to produce a calcium/magnesium fortified milk (control product 2).

Calcium-magnesium fortified milk products prepared in Example 4 and comparative Examples 1 and 2 contained 150 mg/100 ml calcium and 50 mg/100 ml magnesium to yield a calcium-magnesium ratio, by weight, of 3/1. Therefore, an intake of 2 cups (400 ml) of this drink will provide about 2/3 of the daily calcium and magnesium requirement.

### Test Example 1

Calcium-magnesium fortified milk products of product 1 of the present invention and control products 1 and 2 were each stirred (7,000 rpm, 10 minutes) and emulsified using a TK homomixer, then homogenized with a high pressure homogenizer (150 kg/cm²), after which the homogenate was pasteurized by heat (120C, 3 seconds), cooled to 4C and subjected to an organoleptic evaluation by 5 professional panelists.

Results are shown in Table 1.

The results of the evaluation were given by averages of the scores according to the following standards.
1: Very rough and undrinkable.
2: Drinkable but fairly rough.
3: Palpable roughness to the tongue.
4: Slightly palpable roughness to the tongue.
5: No palpable roughness to the tongue.

**Table 1**

| | |
|---|---|
| Product 1 of the present invention | 4.5 |
| Control product 1 | 3.0 |
| Control product 2 | 4.0 |

Results showed that the calcium-magnesium fortified milk admixed with a milk mineral composition of the present invention (product 1 of the present invention) had less roughness and tasted better.

### Test Example 2

Calcium-magnesium fortified milk products of product 1 of the present invention and control products 1 and 2 (100 ml each) were poured into a 100-ml centrifuge tube and stored at 5C for 1 week in the upright position. The supernatant was removed to measure the amount of sediment. Results are shown in Table 2.

**Table 2**

| | |
|---|---|
| Product 1 of the present invention | <0.05 ml |
| Control product 1 | 0.15 ml |
| Control product 2 | 0.10 ml |

Results showed that the calcium-magnesium fortified milk admixed with a milk mineral composition of the present invention (product 1 of the present invention) had less sediment and a better appearance.

The present invention can provide a milk mineral composition which is suitable to admix with drinks and food products for calcium and magnesium fortification and has a well-balanced calcium-magnesium ratio and high solubility. Furthermore, a UF permeate obtained in manufacturing MPC and TMP as a byproduct can be used as a raw material, which is highly significant in terms of the effective use of resources. Further, a milk mineral composition of the present invention can be added to drinks and food products for calcium and magnesium fortification without causing any problem in solubility or taste.

## Claims

1. A method for producing a milk mineral composition wherein a permeate obtained by filtering milk with an ultrafiltration (UF) membrane is filtered with a nanofiltration (NF) membrane to remove monovalent minerals and concentrated to remove lactose by crystallization, after which the resulting liquid is concentrated and/or dried, wherein said composition comprises components in the following ratios (1) and (2);
(1) 0.48 ≥ log{(amount of calcium in composition)/(amount of magnesium in composition)},
(2) -0.30 ≤ log{(amount of calcium in composition)/(amount of sodium in composition)}.

2. A method for producing a milk mineral composition wherein a permeate obtained by filtering milk with an ultrafiltration (UF) membrane is filtered with a monovalent cation selective electrodialysis (ED) membrane to remove monovalent minerals and concentrated to remove lactose by crystallization, after which the resulting liquid is concentrated and/or dried wherein said composition comprises components in the following ratios (1) and (2):
(1) 0.48 ≥ log{(amount of calcium in composition)/(amount of magnesium in composition)}
(2) -0.30 ≤ log{(amount of calcium in composition)/(amount of sodium in composition)}.

3. A milk mineral composition containing components in the following ratios (1) and (2):
(1) 0.48 ≥ log{(amount of calcium in composition)/(amount of magnesium in composition)}
(2) -0.30 ≤ log{(amount of calcium in composition)/(amount of sodium in composition)},
wherein said composition is obtainable by a method comprising the steps of:
filtrating milk with an ultrafiltration (UF) membrane to obtain a permeate:
filtrating the permeate with a nanofiltration (NF) membrane to remove monovalent minerals:
concentrating the resultant liquid to remove lactose by crystallization; and
concentrating and/or drying the resultant material.

4. A milk mineral composition containing components in the following ratios (1) and (2):
(1) 0.48 ≥ log{(amount of calcium in composition)/(amount of magnesium in composition)}
(2) -0.30 ≤ log{(amount of calcium in composition)/(amount of sodium in composition)},
wherein said composition is obtainable by a method comprising the steps of
filtrating milk with an ultrafiltration (UF) membrane to obtain a permeate;
filtrating the permeate with a monovalent cation selective electrodialysis (ED) membrane to remove monovalent minerals;
concentrating the resultant liquid to remove lactose by crystallization; and
concentrating and/or drying the resultant material.

5. A mineral-fortified drink or food product to which the milk mineral composition of claim 4 or 5 is admixed.

## Patentansprüche

1. Verfahren zur Herstellung einer Milchmineralienzusammensetzung, wobei ein Permeat, das durch Filtrieren von Milch mit einer Ultrafiltrationsmembran (UF-Membran) gewonnen wird, mit einer Nanofiltrationsmembran (NF-Membran) filtriert wird, um einwertige'Mineralien zu entfernen, und konzentriert wird, um durch Kristallisation Lactose zu entfernen, wonach die entstandene Flüssigkeit konzentriert und/oder getrocknet wird, wobei die Zusammensetzung Komponenten in den folgenden Verhältnissen (1) und (2) aufweist:
(1) 0,48 ≥ log{(Menge an Calcium in der Zusammensetzung)/(Menge an Magnesium in der Zusammensetzung)}
(2) -0,30 ≤ log{(Menge an Calcium in der Zusammensetzung)/(Menge an Natrium in der Zusammensetzung)}.

2. Verfahren zur Herstellung einer Milchmineralienzusammensetzung, wobei ein Permeat, das durch Filtrieren von Milch mit einer Ultrafiltrationsmembran (UF-Membran) gewonnen wird, mit einer für einwertige Kationen selektiven Elektrodialysemembran (ED-Membran) filtriert wird, um einwertige Mineralien zu entfernen, und konzentriert wird, um durch Kristallisation Lactose zu entfernen, wonach die entstandene Flüssigkeit konzentriert und/oder getrocknet wird, wobei die Zusammensetzung Komponenten in den folgenden Verhältnissen (1) und (2) aufweist:
(1) 0,48 ≥ log{(Menge an Calcium in der Zusammensetzung)/(Menge an Magnesium in der Zusammensetzung)}
(2) -0,30 ≤ log{(Menge an Calcium in der Zusammensetzung)/(Menge an Natrium in der Zusammensetzung)}.

3. Milchmineralienzusammensetzung, die Komponenten in den folgenden Verhältnissen (1) und (2) aufweist:
(1) 0,48 ≥ log{(Menge an Calcium in der Zusammensetzung)/(Menge an Magnesium in der Zusammensetzung)}
(2) -0,30 ≤ log{(Menge an Calcium in der Zusammensetzung)/(Menge an Natrium in der Zusammensetzung)},
wobei die Zusammensetzung durch ein Verfahren erhältlich ist, das die folgenden Schritte aufweist:
Filtrieren von Milch mit einer Ultrafiltrationsmembran (UF-Membran), um ein Permeat zu gewinnen;
Filtrieren des Permeats mit einer Nanofiltrationsmembran (NF-Membran), um einwertige Mineralien zu entfernen;
Konzentrieren der entstandenen Flüssigkeit, um durch Kristallisation Lactose zu entfernen; und
Konzentrieren und/oder Trocknen des entstandenen Materials.

4. Milchmineralienzusammensetzung, die Komponenten in den folgenden Verhältnissen (1) und (2) aufweist:
(1) 0,48 ≥ log{(Menge an Calcium in der Zusammensetzung)/(Menge an Magnesium in der Zusammensetzung)}
(2) -0,30 ≤ log{(Menge an Calcium in der Zusammensetzung)/(Menge an Natrium in der Zusammensetzung)},
wobei die Zusammensetzung durch ein Verfahren erhältlich ist, das die folgenden Schritte aufweist:
Filtrieren von Milch mit einer Ultrafiltrationsmembran (UF-Membran), um ein Permeat zu gewinnen;
Filtrieren des Permeats mit einer für einwertige Kationen selektiven Elektrodialysemembran (ED-Membran), um einwertige Mineralien zu entfernen;
Konzentrieren der entstandenen Flüssigkeit, um durch Kristallisation Lactose zu entfernen; und
Konzentrieren und/oder Trocknen des entstandenen Materials.

5. Mit Mineralien angereichertes Getränk oder Nahrungsprodukt, dem die Milchmineralienzusammensetzung nach Anspruch 4 oder 5 beigemengt ist.

## Revendications

1. Méthode de production d'une composition de minéraux du lait dans laquelle un perméat obtenu en filtrant du lait avec une membrane d'ultrafiltration (UF) est filtré avec une membrane de nanofiltration (NF) afin d'éliminer les minéraux monovalents et concentré afin d'éliminer le lactose par cristallisation, après quoi le liquide obtenu est concentré et/ou séché, dans laquelle ladite composition comprend des composants dans les proportions suivantes (1) et (2) :
(1) 0,48 ≥ log ((quantité de calcium dans la composition)/(quantité de magnésium dans la composition)) ;
(2) -0,30 ≤ log ((quantité de calcium dans la composition)/(quantité de sodium dans la composition)).

2. Méthode de production d'une composition de minéraux du lait dans laquelle un perméat obtenu en filtrant du lait avec une membrane d'ultrafiltration (UF) est filtré avec une membrane d'électrodialyse (ED) sélective pour les cations monovalents afin d'éliminer les minéraux monovalents et concentré afin d'éliminer le lactose par cristallisation, après quoi le liquide obtenu est concentré et/ou séché, dans laquelle ladite composition comprend des composants dans les proportions suivantes (1) et (2) :
(1) 0,48 ≥ log ((quantité de calcium dans la composition)/(quantité de magnésium dans la composition)) ;
(2) -0,30 ≤ log ((quantité de calcium dans la composition)/(quantité de sodium dans la composition)).

3. Composition de minéraux du lait contenant des composants dans les proportions suivantes (1) et (2) :
(1) 0,48 ≥ log ((quantité de calcium dans la composition)/(quantité de magnésium dans la composition)) ;
(2) -0,30 ≤ log ((quantité de calcium dans la composition)/(quantité de sodium dans la composition)),
dans laquelle ladite composition peut être obtenue par une méthode comprenant les étapes de :
filtration du lait avec une membrane d'ultrafiltration (UF) afin d'obtenir un perméat ;
filtration du perméat avec une membrane de nanofiltration (NF) afin d'éliminer les minéraux monovalents ;
concentration du liquide obtenu afin d'éliminer le lactose par cristallisation et
concentration et/ou séchage de la matière obtenue.

4. Composition de minéraux du lait contenant des composants dans les proportions suivantes (1) et (2) :
(1) 0,48 ≥ log ((quantité de calcium dans la composition)/(quantité de magnésium dans la composition)) ;
(2) -0,30 ≤ log ((quantité de calcium dans la composition)/(quantité de sodium dans la composition)),
dans laquelle ladite composition peut être obtenue par une méthode comprenant les étapes de :
filtration du lait avec une membrane d'ultrafiltration (UF) afin d'obtenir un perméat ;
filtration du perméat avec une membrane d'électrodialyse (ED) sélective pour les cations monovalents afin d'éliminer les minéraux monovalents ;
concentration du liquide obtenu afin d'éliminer le lactose par cristallisation ; et
concentration et/ou séchage de la matière obtenue.

5. Boisson ou produit alimentaire fortifié en minéraux auquel la composition de minéraux du lait selon la revendication 4 ou 5 est mélangée.
